# EUROPEAN PATENT APPLICATION

(11) **EP 3 531 366 A2**
(43) Date of publication of application: **28.08.2019**
(21) Application number: 17862935.8
(22) Date of filing: 20.04.2017
(51) Int. Cl.: G06Q 40/06, G06Q 40/04, G06Q 30/06, G06Q 10/02

(54) **FX MARGIN TRADING RENT TRADING METHOD**

(30) Priority: 19.10.2016 KR 20160135527
(71) Applicant: Jo, Jung Sik, Pocheon-si, Gyeonggi-do 11154 (KR)
(72) Inventor: Jo, Jung Sik, Pocheon-si, Gyeonggi-do 11154 (KR)
(74) Representative: Grünecker Patent- und Rechtsanwälte PartG mbB
(86) International application number: PCT/KR2017/004222
(87) International publication number: WO 2018/074687

(57) **Abstract**

The present invention relates to a foreign exchange (FX) margin trading rent transaction method, in which a company server is configured to: while not closing but holding FX margin trading products purchased by bearing a customer margin and a spread cost in a capacity as an investor in an FX margin trading market, generate at least one split product by distinguishing and splitting the FX margin trading products based on a rental volume for each rental start time period in which a rental start time and a rental end time are determined and setting a stop position indicating disqualification from a loss by difference of price and a limit position indicating a profit taking; make a rent transaction contract with a member by receiving a rental deposit for each of split products in a prepayment; determine, upon the split product rented by the rent transaction contract member having reached the stop position or the limit position according to a real-time exchange rate fluctuation value in the FX margin trading market from the rental start time of the rental start time period, disqualification from a loss by difference of price or profit taking; terminate the rent transaction contract of the member; settle the rental deposit as loss from difference of price in the case of disqualification from a loss by difference of price; and settle a sum of the rental deposit and an agreed profit distribution as profit margin in the case of profit taking so that the profit margin is paid to the member. According to the present invention, when conducting an actual FX margin trade, the member can rent and practice the actual FX margin trade without bearing the expensive customer margin and wasting the spread cost and can acquire an FX margin trading habit of limiting loss from difference of price to the rental deposit to minimize the loss from difference of price while maximizing the profit margin.

## Description

### [Technical Field]

The present invention relates to a Foreign Exchange (FX) margin trading method, and more particularly, to an FX margin trading-rent transaction method.

### [Background Art]

With the popularization of computers and the increase of Internet speed today, the fields of using computers, such as e-commerce, also have been proliferated in various fashions.

Hence, stocks, futures, and options have long been traded on the Internet, checking trades in real time, and in recent years, attentions have been drawn to a Foreign Exchange (FX) margin trading which obtains margins by trading foreign exchange gain based on exchange rate differentials in the world.

The FX margin trading composes a product in a currency pair of a base currency/a counter currency, and a basic contract size is referred to as lot, and 1 lot is set to a base currency x 100000, equivalent to $100,000 in a regular base currency (US dollars).

The following explanation assumes that the Korean currency exchange rate of $ 1 is 1,000 won.

In addition, a unit of quotation in the FX margin trading is referred to as Percentage In Point (PIP). 1 pip is set to 0.0001 of an exchange rate unit of a currency pair according to the rules defined by International Standards Association (ISO), and in general, a 1 pip has a value of $10 (10,000 won), and exceptionally, for a currency pair including the Japanese yen, 1 pip is 0.01 of an exchange rate unit of the currency pair. Recently, in order to more precisely display an exchange rate in the FX margin trading, a currency pair including the Japanese yen has been displayed up to the third decimal place (for example, 0.001), and the remaining currency pairs except for the Japanese yen have been displayed up to the fifth decimal place (for example, 0.00001).

The FX margin trading does not require a great amount of capital as in trading the stocks or futures, and when trading one lot, that is, when $100,000(100,000,000 won) is traded at one time, due to a leverage effect, it is possible to conduct a $100,000(100,000,000 won) trade with a customer margin of $10,000 (10,000,000 won) that is 10% of a contract deposit $100,000 (100,000,000 won), giving individual investors an opportunity to earn a high profit with small capital and thus it is getting great popularity.

The FX margin trading requires a customer margin equivalent to 10% of the contract deposit per a contract unit, and requires a maintenance margin equivalent to 50% of the customer margin to maintain the trading. In particular, an investor has difficulty in directly checking and responding to the situation of the trading market for 24hours, and in order to prevent excessive loss of the investor, a broker who handles sell/buy orders of the FX margin trading conducts a loss cut on all contracts held by the investor (for example, a short position or a long position) when the maintenance margin is below 50% of the customer margin, and prior to the loss-cut, the broker may notify a margin call when the maintenance margin stays below 60% to 70% of the customer margin, to instruct the investor to additionally deposit a customer margin or to close out some of the contracts held by the investor.

For example, the FX margin trading requires a customer margin of $10,000 (10,000,000 won) equivalent to 10% of a contract deposit of $100,000(100,000,000 won) for a basic contract size, 1 lot, and at the time when the maintenance margin falls below $5,000 (5,000,000 won) equivalent to 50% of the customer margin, the 1 lot contract is closed out.

In particular, the FX margin trading has a spread for a single trade, and the spread shows a change in an exchange rate of a bid price and an ask price, that is, a difference between a bid price and an ask price, and is displayed in pips. When a bank takes an order according to a request of a customer, the bank needs to buy or sell a relevant currency in another bank or foreign exchange markets, so there is always a gap between the ask price and the bid price. A frequently traded currency has a narrow spread, and a local currency has a wide spread. Since the spread is paid once at a single trade, it may be considered a fee for the trade.

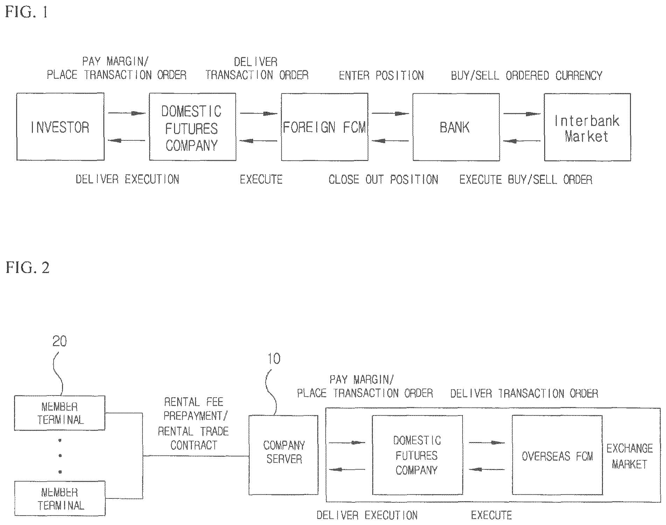

FIG. 1 is a block diagram illustrating a mechanism of an FX margin trading, in which when an investor pays a domestic future companies for a customer margin for a trade and places buy/sell orders, and the domestic futures company sends the order to a foreign Futures Commission Merchant (FCM), and the foreign FCM collects investor's orders received from all over the world and delivers the orders to an international bank trading with the foreign FCM. Such a process is referred to as a position entry because an FX margin trading product is generally divided into a long position and a short position. The international bank in a state of position entry searches Interbank Market for another bank which is able to take orders, and delivers the order to the found bank, so that the investors' orders are processed.

The processed order is notified to the investor, and at any time, the investor may close the position by buying/selling the processed order.

When conducting the FX margin trading, novices merely conduct trades by only learning the theory without having practical training, which causes investment losses in many cases, and a loss incurred due to a spread, which is spent as a transaction fee at each trade, takes a majority of the investment loss.

For example, as described above, in a 1 lot trade, assuming that a $100,000 (one hundred million won) trade is possible with a small margin (10,000,000 won), equivalent to 10% of one hundred million won, and a spread paid as a trade fee for a single trade is 5 pip, about $50 (50,000 won) when the FX margin trade is conducted in a unit of one lot at a time, increase in the frequency of the trades increments the spread costs, and a failure to gain an investment profit higher than the spread cost leads to an investment loss.

For example, when a spread for a single time of one lot FX margin trade is 5 pip, about $50 (50,000 won), and an investor executes one lot trade eight times a day, a spread cost of $400 (400,000 won) is spent one day, and when trades are executed for an average of 200 days per year, that is, 1600 times of trades are executed, an accumulated spread cost approximates 80,000,000 won.

Therefore, when an investor executes one lot trade eight times per day for an average of 200 days per year as described above, but fails to gain an investment profit higher than the accumulated spread cost, an average of 80,000,000 won, it leads to an investment loss, and as the number of times of the trades increases, the accumulated spread costs are incremented by the increase in the frequency of trades and the loss due to the accumulated spread cost becomes a majority of the investment loss.

Meanwhile, a novice individual investor has a trade training before conducting an actual FX margin trade by using a simulation trade program provided by a domestic futures company through online, and then conducts an actual FX margin trade.

When the novice individual investor uses a simulation trade program as the above, the investor does not need to deposit a customer margin for an actual FX rent trade into a trading account, and may conduct a trade training without having a loss incurred by a spread cost and an actual investment loss. However, the simulation program provides experience significantly different from that of an actual trading, so it is difficult to expect a clear achievement in an actual FX margin trade.

In addition, since the simulation trade program, which is not an actual investment, makes no profit, it does not satisfy the desire of investors who want an actual profit.

### [Disclosure]

### [Technical Problem]

The present invention is directed to providing a foreign exchange (FX) margin trading rent transaction method, in which a company server for providing an FX margin trading rent transaction service is configured to: while not closing but holding FX margin trading products purchased by bearing a customer margin and a spread cost in a capacity as an investor in an FX margin trading market, generate at least one split product by distinguishing and splitting the FX margin trading products based on a rental volume for each rental start time period in which a rental start time and a rental end time are determined and setting a stop position indicating disqualification from a loss by difference of price and a limit position indicating a profit taking; make a rent transaction contract with a member by receiving a rental deposit for each of split products in a prepayment; determine, upon the split product rented by the rent transaction contract member having reached the stop position or the limit position according to a real-time exchange rate fluctuation value in the FX margin trading market from the rental start time of the rental start time period, disqualification from a loss by difference of price or profit taking; terminate the rent transaction contract of the member; settle the rental deposit as loss from difference of price in the case of disqualification from a loss by difference of price; and settle a sum of the rental deposit and an agreed profit distribution as profit margin in the case of profit taking so that the profit margin is paid to the member.

### [Technical Solution]

According to an aspect of the present invention, there is provided a foreign exchange (FX) margin trading rent transaction method including: a first process in which a company server operated by an FX margin trading rent transaction service providing company holds at least one FX margin trading product through a transaction contract of paying a customer margin for a transaction and a spread cost in a capacity as an investor in an FX margin trading market; a second process in which the company server generates at least one split product by distinguishing and splitting the at least one FX margin trading product based on a rental volume for each rental start time period in which a rental start time and a rental end time are determined and setting a stop position indicating disqualification from a loss by difference of price and a limit position indicating profit taking, and sets a rental deposit for each of the at least one split product; a third process in which when a member terminal used by a member requesting an FX margin trading rent transaction service accesses and logs in the company server, the company server displays a rental start time, a stop position, a limit position, a rental deposit, and a rent transaction contract application button that are distinguished for each of the at least one split product on the member terminal; a fourth process in which when the member terminal prepays a rental deposit of the split product after the rent transaction contract application button of the split product displayed on the member terminal is pressed, the company server confirms a rent transaction contract of the split product, the rental deposit of which is prepaid, and provides a guidance of a rent transaction status for each split product to the member terminal such that the members check a rent transaction trend and apply for a rent transaction contract; a fifth process in which after the rent transaction contract of the split product is confirmed, the company server displays a real-time exchange rate fluctuation value graph in the FX margin trading market on the member terminal from a rental start time of the rent transaction contract while automatically displaying on the exchange rate fluctuation value graph a stop position reaching guidance line and a limit position reaching guidance line in the rental start time period determined for the split product which is currently being rent traded, and determines whether a split product rented by a rent transaction contract member reaches the stop position or the limit position according to the exchange rate fluctuation value; a sixth process in which the company server notifies the member of disqualification from a loss by difference of price by turning on or flickering the stop position reaching guidance line when the exchange rate fluctuation value of the split product currently being rent traded is identified to reach the stop position in the rental start time period, and notifies the member of profit taking by turning on or flickering the limit position reaching guidance line when the exchange rate fluctuation value of the split product currently being rent traded is identified to reach the limit position in the rental start time period; and a seventh process in which the company server determines, upon identifying that the split product rented by the rent transaction contract member has reached the stop position or the limit position, disqualification from a loss by difference of price or profit taking, and terminates the rent transaction contract of the member and notifies the member terminal of the termination, wherein in the case of disqualification from a loss by difference of price, the rental deposit is settled as loss from difference of price and in the case of profit taking, a sum of the rental deposit and an agreed profit distribution is settled as profit margin.

In the second process, the company server may generate at least one long position split product from the FX margin trading product currently held by the company server.

In the second process, the company server may generate at least one shot position split product from the FX margin trading product currently held by the company server.

In the second process, the company server may generate at least one long position split product and at least one short position split product from the FX margin trading product currently held by the company server.

In the fourth process, the company server may provide the guidance of the rent transaction status for each of split products by using one or at least two of a method of displaying a variation in the number of remaining rent transaction contracts by changing a color of the rent transaction contract application button displayed on the member terminal, a method of displaying a signal lamp indicating a variation in the number of remaining rent transaction contracts on the member terminal, and a method of displaying a numeral corresponding to the number of remaining rent transaction contracts on the member terminal.

In the fourth process, the company server may confirm rent transaction contracts for the respective split products, print out each of the rent transaction contracts, and issue and automatically store a rental prepayment contract document that specifies a rental start time, a stop position, a limit position, a rental deposit which is offset-settled as loss from difference of price in the case of disqualification from a loss by difference of price, a profit distribution which is paid together with a rental deposit in the case of profit taking, and a member identification (ID) for each of the rent transaction contract members.

In the sixth process, when the rent transaction contract of the split product is terminated in the corresponding rental start time period, the member terminal may display a result of determining disqualification from a loss by difference of price or profit taking of the split product on the exchange rate fluctuation value graph to notify the member of the result.

In the sixth process, when the rent transaction contract of the split product is not terminated in the corresponding rental start time period, the company server may indefinitely extend a contractual term of the rent transaction contract until the exchange rate fluctuation value of the split product, which is not terminated with the rent transaction contract, reaches the stop position or the limit position of the split product, may restrict the number of rent transaction contracts by a total number of transactions having a contractual term extended, that is, a total number of split products having a contractual term extended, and may terminate the rent transaction contract immediately after the exchange rate fluctuation value of the split product, which is not terminated with the rent transaction contract, reaches the stop position or the limit position of the split product during a period of the extension.

In the seventh process, in the case of disqualification from a loss by difference of price, the company server may settle the rental deposit as loss from difference of price, and cumulatively store the rental deposit as a preliminary customer margin to be additionally deposited upon notification of a margin call for an FX margin trading product being held and currently not close out the transaction.

In the seventh process, in the case of disqualification from a loss by difference of price, the company server may settles the rental deposit as loss from difference of price, and cumulatively store the rental deposit as a preliminary customer margin to be additionally deposited upon notification of a margin call for an FX margin trading product being held and currently not close out,.

and may pay the profit distribution lowered at an agreed rate such that a sum of the profit margins accruing at a time of a rent transaction of a member is less than the cumulated preliminary customer margin, thereby preventing default on paying the profit margin.

### [Advantageous Effects]

According to the present invention, the company server buys/sells an FX margin trading product by bearing a customer margin for transaction in a capacity as an investor in an FX margin trading market, so that the member can rent and practice an actual FX margin trade without bearing a great amount of customer margin that is necessary for an actual FX margin trading. In particular, since the company server conducts a rent transaction for a split product by receiving a small amount of rental deposit, the split product generated from an FX margin trading product, which is traded by the company server paying for a spread cost in a capacity as an investor in an FX margin trading market, the member can rent and practice an actual FX margin trade without wasting the spread cost while the company server is not closing but holding the FX margin trading product. When a member uses the FX margin trading rent transaction service according to the present invention, the small amount of rental deposit is settled as loss from difference of price in the case of disqualification from a loss by difference of price for the rented split product, and a sum of the rental deposit and the distribution agreed for the rented FX margin trading product is given as profit margin in the case of profit taking, so that an FX margin trading habit of limiting loss from difference of price to the small amount of rental deposit to minimize the loss from difference of price while maximizing the profit margin is acquired, and the profit margin is realized as an actual investment return so that a rent transaction contract is made again.

According to the present invention, since the company server provides a guidance of a rent transaction status of a split product to the member terminal, members may be able to apply for a rent transaction contract in a direction beneficial in realizing profit by checking a trend of rent transactions being increased or decreased.

According to the present invention, the member is informed of whether the rent transaction is disqualification from a loss by difference of price or profit taking by the stop position reaching guidance line and the limit position reaching guidance line turning on or flickering, so that the member can check disqualification from a loss by difference of price or profit taking of the rent transaction in a convenient and rapid manner.

According to the present invention, when the rent transaction contract of the split product is terminated within a corresponding rental start time period, the member terminal displays a result of determining disqualification from a loss by difference of price or profit taking of the split product on the exchange rate fluctuation value graph to inform the member of the result, so that the member is able to rapidly check a trend of disqualification from a loss by difference of price or profit taking of the rent transaction and may apply for the rent transaction contract in a direction beneficial in profit taking.

According to the present invention, a profit distribution is lowered at an agreed rate and paid, such that a sum of the profit margins accruing at a time of a rent transaction of a member is less than an accumulated preliminary customer margin, thereby preventing default on paying the profit margin.

According to the present invention, a contractual term of the rent transaction of the split product is indefinitely extended until the currently rent traded split product is terminated, and the number of rent transaction contracts is restricted by a total number of transactions having a contractual term extended, so that a split product generated from an FX margin trading product held by the company server for providing an FX margin trading rent transaction service is prevented from being rent-traded illegally in dual or multi states in a state that the rent transaction contract is not terminated, and the reliability of the rent transaction service is improved.

### [Description of Drawings]

FIG. 1 is a block diagram illustrating a mechanism of a conventional foreign exchange (FX) margin trading.
FIG. 2 is a block diagram illustrating a configuration of an FX margin trading rent transaction system for performing an FX margin trading rent transaction method according to the present invention.
FIG. 3 is a view of an embodiment illustrating a screen showing split products that are generated by distinguishing and splitting FX margin trading products based on a rental volume for each rental start time period.
FIG. 4 is a view of an embodiment illustrating a screen that provides a rent transaction status for each split product.
FIG. 5 is a view of an embodiment illustrating a rental prepayment contract document according to the present invention.
FIG. 6 is a view of an embodiment illustrating a deposit application screen for prepaying a rental deposit according to the present invention.
FIG. 7 is a view of an embodiment illustrating a deposit application screen shown in FIG. 6 with a rental deposit completed.
FIG. 8 is a view of an embodiment illustrating a real time exchange rate fluctuation value graph in an FX margin trading market which is displayed from a rental start time of a rent transaction contract for a split product generated from an FX margin trading product.
FIG. 9 is a view of an embodiment illustrating a state in which an exchange rate fluctuation value of a split product currently being rent traded reaches a limit position in the rental start time period.
FIG. 10 is a view of an embodiment illustrating a screen displaying a result of determining disqualification from a loss by difference of price or profit taking after conducting a rent transaction of a split product generated from an FX margin trading product on the exchange rate fluctuation value graph.
FIG. 11 is a view of an embodiment illustrating a screen for determining disqualification from a loss by difference of price or profit taking as a result of a rent transaction of a split product of an FX margin trading product, terminating a rent transaction contract of a member, and notifying the termination.
FIG. 12 is a view of a first embodiment illustrating a data table screen in which disqualification from a loss by difference of price or profit taking is determined as a result of a rent transaction of a split product generated from an FX margin trading product according to the present invention.
FIG. 13 is a view of a second embodiment illustrating a data table screen in which disqualification from a loss by difference of price or profit taking is determined as a result of a rent transaction of a split product generated from an FX margin trading product according to the present invention.
FIG. 14 is a view of a third embodiment illustrating a data table screen in which disqualification from a loss by difference of price or profit taking is determined as a result of a rent transaction of a split product generated from an FX margin trading product according to the present invention.
FIG. 15 is a view of a fourth embodiment illustrating a data table screen in which disqualification from a loss by difference of price or profit taking is determined as a result of a rent transaction of a split product generated from an FX margin trading product according to the present invention.
FIG. 16 is a view of an embodiment illustrating a withdrawal application screen for paying a profit margin that is a sum of a rental deposit and an agreed profit distribution.
FIG. 17 is a view of an embodiment illustrating a withdrawal application screen with a requested amount of withdrawal money withdrawn.

### [Best Mode for Invention]

Hereinafter, an exemplary embodiment of the present invention will be described in detail with reference to the accompanying drawings.

Referring to FIG. 2, a foreign exchange (FX) margin trading rent transaction system for performing an FX margin trading rent transaction method according to the present invention includes a company server 10 and a member terminal 20.

The company server 10 is operated by an FX margin trading rent transaction service providing company, and performs an FX margin trading rent transaction method by communicating with the member terminal 20 through a wired / wireless communication network (e.g. wired Internet, wireless Internet, mobile phone network, etc.).

The company server 10 preferably uses a server computer, a personal computer, a desktop, or the like capable of communicating via a wired / wireless communication network (e.g. a wired Internet, a wireless Internet, mobile phone network, etc.).

The member terminal 20 is used by a member subject to the FX margin trading rent transaction service, and performs the FX margin trading rent transaction method by communicating with the company server 10 via a wired / wireless communication network (e.g. wired Internet, wireless Internet, mobile phone network, etc.).

The member terminal 20 preferably uses a personal computer, a desktop computer, a mobile communication device (e.g. a smart phone, a tablet, a notebook PC, or the like) capable of communicating via a wired / wireless communication network (e.g. wired Internet, wireless Internet, mobile phone network, etc.).

The FX margin trading rent transaction method according to the present invention is performed as follows, by the FX margin trading rent transaction system according to the present invention constructed as described above.

First, the company server 10, in a capacity as an investor in an FX margin trading market, holds at least one FX margin trading product through a trade contract of paying a customer margin for a trade and a spread cost (the first process).

For example, the company server 10 holds at least one long position FX margin trading product (N FX margin trading products) or at least one short position FX margin trading product (M FX margin trading products). In this case, a total of N+M FX margin trading products establish a relationship of 0 < N+M, and N≠M or N=M.

When the total of N + M FX margin trading products held by the company server 10 is 0 <N + M and N ≠ M, then the number of long position FX margin trading products is larger than the number of short position FX margin trading products, or conversely, the number of short position FX margin trading products is larger than the number of long position FX margin trading products.

On the other hand, when the total of N + M FX margin trading products held by the company server 10 is 0 <N + M and N = M, the number of long position FX margin trading products is the same as the number of short position FX margin trading products.

At this time, the company server 10 pays a domestic futures company for a customer margin for a trade in a capacity as an investor in an exchange market, places a buy/sell order, bears a spread cost whenever placing a buy/sell order, and buy/sells and holds an FX margin trading product through the FX margin trade mechanism as shown in FIG. 1.

As described above, since the company server 10 bears the customer margin for a trade in a capacity as an investor in an FX margin trading market and buys/sells an FX margin trading product, a member is able to rent and practice an actual FX margin trade without paying the expensive customer margin that is required for an actual FX margin trade.

In this state, the company server 10 is configured to generate at least one split product by distinguishing and splitting the currently held FX margin trading products based on the rental volume for each rental start time period in which a rental start time and a rental end time are determined, and setting a stop position indicating disqualification from a loss by difference of price and a limit position indicating profit taking, and to set a rental deposit for each split product (the second process).

In this case, the company server 10 may generate at least one long position split product, at least one short position split product, or at least one long position split product and at least one short position split product from the FX margin products currently held by the company server 10.

For example, the company server 10, while holding the above described N+M (0 < N+M and, N≠M or N=M) FX margin trading products that are not closed out, may distinguish and split the currently held N long position FX margin trading products based on the rental volume for a rental start time period in which a rental start time and a rental end time are determined (for example, a time period of 10 minutes, a time period of 20 minutes, a time period of 30 minutes, and a time period of one hour) and may set a stop position indicating disqualification from a loss by difference of price and a limit position indicating profit taking, to generate n1 (1≤n1≤N) long position split products or n2 (1≤n2≤N) short position split products so that a total of nl+n2 rent transaction split products may be generated (0 < n1+n2≤N and, n1≠n2 or n1=n2).

Alternatively, the company server 10 may distinguish and split the currently held M short position FX margin trading products based on the rental volume for a rental start time period in which a rental start time and a rental end time are determined and may set a stop position indicating disqualification from a loss by difference of price and a limit position indicating profit taking, to generate m1 (1≤m1≤M) short position split products or m2 (1≤m2≤M) long position split products so that a total of m1+m2 rent transaction split products may be generated (0 < m1+m2≤M and, m1≠m2 or m1=m2).

As described above, the company server 10 may generate a total of N + M (0 <N + M, and N ≠ M or N = M) rent transaction split products and sets a rental deposit for each of the long position split products or for each of the short position split products.

As described above, in a state that the company server 10 generates rent transaction split products from the FX margin trading products current held, and sets a rental deposit for each of the rent transaction split products, when the member terminal 20 accesses and logs in the company server 10, the company server 10 displays a rental start time, a stop position, a limit position, a rental deposit, and a rent transaction contract application button that are specified for each of the split products on the member terminal 20 (the third process).

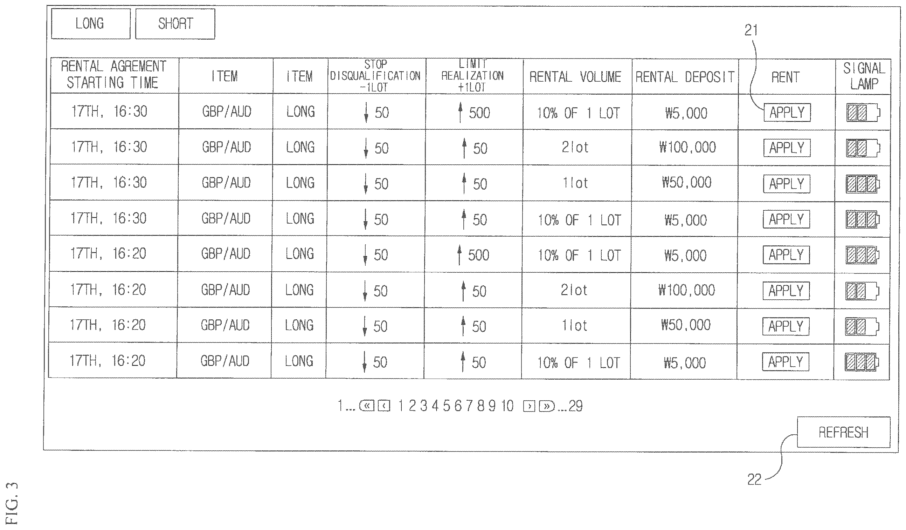

For reference, FIG. 3 illustrates a screen showing long position split products that are generated by distinguishing and splitting the currently held FX margin trading products based on the rental volume for each rental start time period in which a rental start time and a rental end time are determined, for example, for each time period of 10 minutes.

FIG. 3 illustrates four long position split products that are generated by being distinguished and divided based on the rental volume, that is, 1 lot, 2 lots, and 10% of 1 lot in a time period of 16:20 on a date of the 17th, and four long position split products that are generated by being distinguished and divided based on the rental volume, that is, 1 lot, 2 lots, and 10% of 1 lot in a time period of 16:30 on a date of the 17th. A rent transaction contract application button 21 is displayed for each of the long position split products. FIG. 3 illustrates that a rental deposit for 1 lot (that is, a contract size of one rent transaction) is set to 50,000 won ($50 with an exchange rate of 1000 won per $1).

Referring to FIG. 3, when a short button located at an upper left end is selected, the screen having displayed the long position split products is converted to display short position split products, for example, display four short position split products that are generated in a time period of 16:20 on a date of the 17th and four short position split products that are generated in a time period of 16:30 on a date of the 17th, and a rent transaction contract application button 21 for each of the short position split products.

A product corresponding to a rental volume of 1 lot among the long position split products shown in FIG. 3 is a product in which 50,000 won ($50) is set as a rental deposit for a rent transaction, and a stop position indicating disqualification from a loss by difference of price and a limit position indicating profit taking are set to an exchange rate fluctuation decrease of 50 (↓50) and an exchange rate fluctuation increase of 50(↑50), respectively.

A product corresponding to a rental volume of 2 lots among the long position split products shown in FIG. 3 is a product in which 100,000 won ($100) is set as a rental deposit for a rent transaction, and a stop position indicating disqualification from a loss by difference of price and a limit position indicating profit taking are set to an exchange rate fluctuation decrease of 50 (↓50) and an exchange rate fluctuation increase of 50(↑50), respectively.

A product corresponding to a rental volume of 10% of 1 lot among the long position split products shown in FIG. 3 is a product in which 5,000 won ($5) is set as a rental deposit for a rent transaction, and a stop position indicating disqualification from a loss by difference of price and a limit position indicating profit taking are set to an exchange rate fluctuation decrease of 50 (↓50) and an exchange rate fluctuation increase of 50(↑50), respectively.

Another product corresponding to a rental volume of 10% of 1 lot among the long position split products shown in FIG. 3 is a product in which 5,000 won ($5) is set as a rental deposit for a rent transaction, and a stop position indicating disqualification from a loss by difference of price and a limit position indicating profit taking are set to an exchange rate fluctuation decrease of 50 (↓50) and an exchange rate fluctuation increase of 500(↑500), respectively.

In FIG. 3, in order to indicate a precise exchange rate in an FX margin trading rent transaction according to the present invention, for even the remaining currency pairs, except for the Japanese yen, an exchange rate fluctuation value is displayed up to the fifth decimal place (e. g, 0.00001). In this case, for a currency pair (GBP/AUD) consisting of a base currency, the British Pound (GBP) and a counter currency, the Australian dollar (AUD), when a decrease in the exchange rate fluctuation value of the AUD from the open price of 1.72900 at the rental start time to 1.72850 during the session indicates reaching the stop position (↓50) corresponding to the exchange rate fluctuation value decrease of 50, an increase in the exchange rate fluctuation value of the AUD to 1.72950 during the session indicates reaching the limit position (↑50) corresponding to the exchange rate fluctuation value increase of 50, and an increase in the exchange rate fluctuation value of the AUD to 1.73400 during the session indicates reaching the limit position (t500) corresponding to the exchange rate fluctuation value increase of 500.

As described with reference to FIG. 3, in a state that the rent transaction contract application button 21 for each of the long position split products (or for each of the short position split products) is displayed, when the rent transaction contract application button 21 selected by a member is pressed and then the member terminal 20 prepays the rental deposit of the corresponding split product, the company server 10 conforms a rent transaction contract of the corresponding split product, the rental deposit of which is prepaid, and provides the member terminal 20 with a guidance of a rent transaction status for each split product such that members check a rent transaction trend and apply for a rent transaction contract (the fourth process).

As such, since the company server 10 executes a rent transaction by receiving, in a prepayment method, a small amount of a rental deposit for an FX margin trading product which has been purchased by paying a spread cost in a capacity as an investor in an FX margin trading market, a member may be able to rent and practice the actual FX margin trade without wasting the spread cost while the company server 10 is holding the FX margin trading product without closing the FX margin trading product.

In addition, since the company server 10 provides the member terminal 20 with a guidance of a rent transaction status of a split product, members may be able to apply for a rent transaction contract in a direction beneficial in realizing profit by checking a trend of rent transactions being increased or decreased.

In this case, the company server 10 may provide the rent transaction status guidance for each split product by using a method of displaying a variation in the number of remaining rent transaction contracts by changing a color of the rent transaction contract application button 21 displayed on the member terminal 20.

For example, the company server 10 may change the color of the rent transaction contract application button 21 displayed on the member terminal 20 in a consecutive order of blue, yellow, and red, respectively, indicating "large" noting that the number of remaining rent transaction contracts is large as much as 70% or above, "middle" noting that the number of remaining rent transaction contracts is small as much as 50% or below, and "small" noting that the number of remaining rent transaction contracts is very small as much as 20% or below, so that the guidance of the rent transaction status is provided.

For a more specific example, when the company server 10 holds 10 rent transaction contracts for a long position split product having a rental volume of 1 lot in a time period of 16:20 on a date of the 17th as shown in FIG. 3, a member may apply for a total of 10 rent transaction contracts by selecting the rent transaction contract application button 21 of the split product. In this case, until the applications of the total of 10 rent transaction contracts are completed, the company server 10 changes the color of the rent transaction contract application button 21 displayed on the member terminal 20 in a consecutive order of blue, yellow, and red to indicate large, middle, and small amounts of remaining rent transaction contracts among the total of 10 rent transaction contracts.

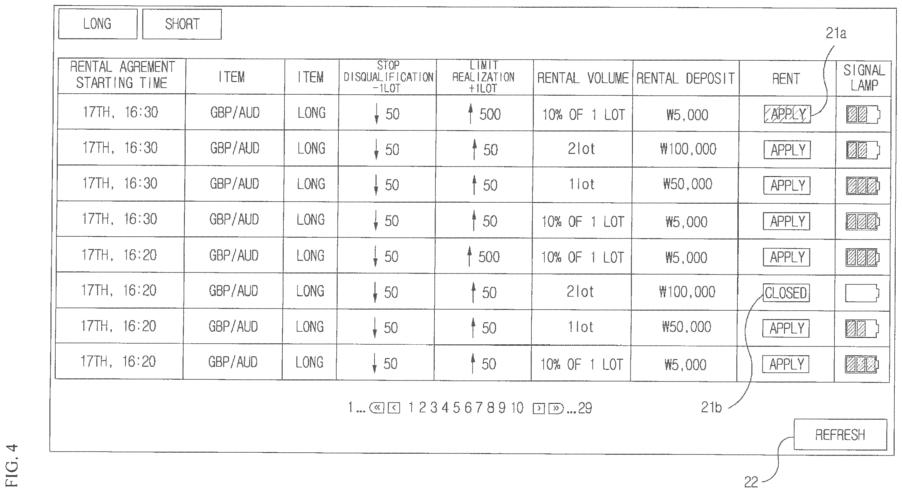

For reference, a rent transaction contract application button 21a marked in hatching lines in FIG. 4 represents a state that a rent transaction contract application button 21 of a long position split product having a rental volume of 10% of 1 lot (a limit position of t500) in a time period of 16: 20 on a date of the 17th shown in FIG. 3 has been changed in color to indicate large, middle, and small amounts of the remaining rent transaction contracts among rent transaction contracts of the corresponding split product. In addition, a closed button 21b shown in FIG. 4 represents a state that a rent transaction contract application button 21 of a long position split product having a rental volume of 2 lots (a limit position of ↑50) in a time period of 16: 20 on a date of the 17th shown in FIG. 3 has been changed in text from 'apply' to 'closed' to notify that the rent transaction contract is sold out and closed. Whenever a refresh button 22 shown in FIG. 4 is selected, a current rent transaction contract status of a rent transaction split product that is generated by being distinguished and split based on a rental volume for each determined rental start time period is newly displayed on the member terminal 20 through the rent transaction contract application button 21.

In the fourth process, the company server 10 may provide the member terminal 20 with the guidance of the rent transaction status for each split product in a different manner.

For example, the company server 10 may provide the member terminal 20 with a rent transaction status for each split product by displaying a signal lamp (not marked) indicating a variation in the number of remaining rent transaction contracts. In this case, the company server 10 may change the color of the signal lamp in a consecutive order of blue, yellow, and red to indicate large, middle, and small amounts of remaining rent transaction contracts, or may change the number or height of a level gauge in the signal lamp together with changed color to indicate large, middle, and small amounts of remaining rent transaction contracts as shown in FIG. 3. A signal lamp on the right side of the closed button 21b shown in FIG. 4 represents that a level gauge is empty to indicate that rent transaction contracts of a long position spilt product having a rental volume of 2 lots in a time period of 16: 20 on a date of the 17th are sold out and thus closed.

Alternatively, the company server 10 may provide the member terminal 20 with a rent transaction status for each split product by indicating the number of remaining rent transaction contracts by numerals. For example, when the number of remaining rent transaction contracts is seven, five, or two, the company server 10 may display a numeral of 7, a numeral of 5, or a numeral of 2 instead of texts in the rent transaction contract application button 21, or may display the numeral on the signal lamp or at the right side of the signal lamp.

Meanwhile, in the fourth process, when the rent transaction contract application button 21 selected by the member is pressed and then a rental deposit of the corresponding split product is prepaid by the member terminal 20, the company server 10 confirms rent transaction contracts for each of the split products, prints out each of the rent transaction contracts, and issues and automatically stores a rental prepayment contract document that specifies a rental start time, a stop position, a limit position, a rental deposit which is offset-settled as a loss from difference of price at a time of disqualification from a loss by difference of price, a profit distribution which is returned together with a rental deposit at a time of profit taking, and a member identification (ID) for each of the rent transaction contract members.

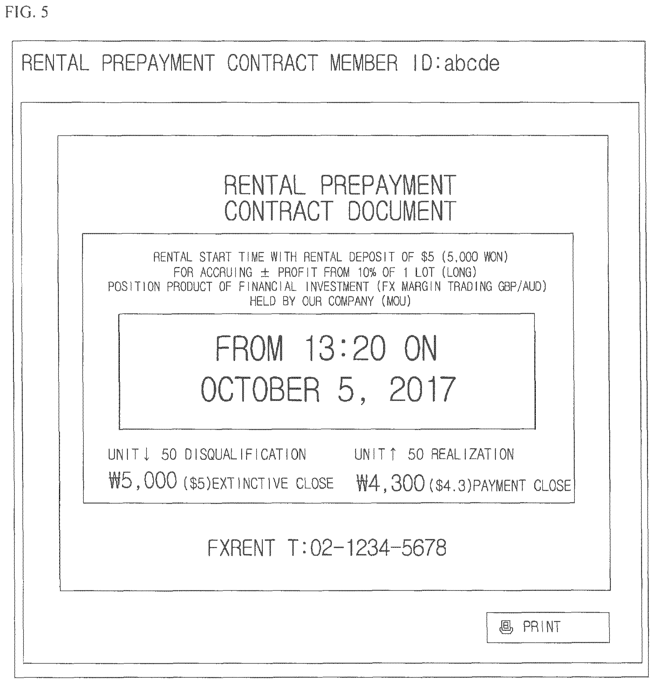

FIG. 5 is a view of an embodiment illustrating a rental prepayment contract document according to the present invention, which represents a rental prepayment contract document for verifying that a member has selected one, among long position split products, which has a rental volume of 10% of 1 lot, a rental start time of October 5, 2017, 13: 20, and a stop position indicating disqualification from a loss by difference of price and a limit position indicating profit taking that are set to an exchange rate fluctuation decrease of 50 (↓50) and an exchange rate fluctuation increase of 50(↑50), respectively, and the member has prepaid a rental deposit of 5,000 won ($5) for a rent transaction so that the rent transaction is agreed. When a print button (not marked) in FIG. 5 is selected, the rental prepayment contract document is printed out.

Meanwhile, in the fourth process, the process of the member terminal 20 prepaying the rental deposit of the split product after the rent transaction contract application button 21 selected by the member is pressed may be performed by clicking the rent transaction contract application button 21, and may be implemented using known payment methods (e.g. card settlement, bank account transfer, mobile phone settlement, etc.) at the time of the trade through wired and wireless communication networks (e.g., wired Internet, wireless Internet, mobile phone network, etc.).

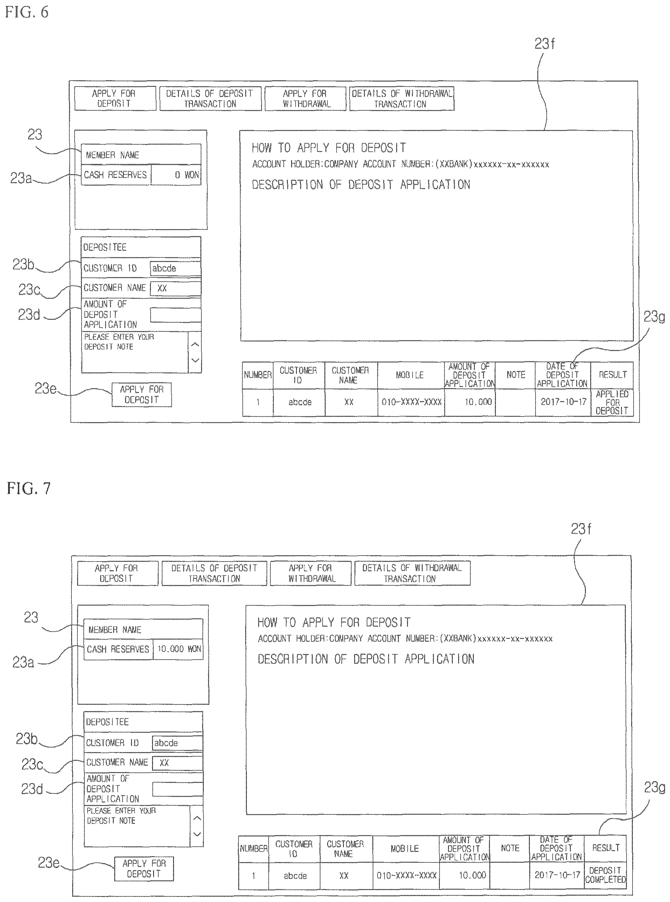

For reference, FIG. 6 is a view of an embodiment illustrating a deposit application screen in which as the rent transaction contract application button 21 is selected, the member terminal 20 checks a rent transaction contract application and prepays a rental deposit set for the selected long position split product or the short position split product. The deposit application screen includes a member name display box 23, a cash reserves display box 23a, a customer ID display box 23b of a depositee, a customer name display box 23c of a depositee, a deposit amount input box 23d of a depositee, a deposit application button 23e, a deposit application method and description box 23f including a company account, and a deposit application details display box 23g including a customer ID, a customer name, a mobile phone number, an amount of deposit application, a date of deposit application, and a result.

When a deposit transaction detail button (not marked) is selected, contents displayed in the deposit application record details box 23g are organized by dates of deposit applications whenever a deposit application is made by a member and are displayed in the member terminal 20 as a deposit transaction history, and a member may enter a note desired to be sent to an administrator of the company server 10 at a time of deposit application in a memo box (not marked).

FIG. 6 illustrates a screen in which when the rental deposit is paid from a member account to a company account through a bank account transfer, the member terminal 20 confirms that the amount of deposit application has been entered in the deposit amount input box 23d, and as the deposit application button 23e is selected, requests a deposit application of the member. FIG. 7 illustrates a screen in which the company server 10 confirms completion of the payment and notifies the member terminal 20 that the deposit application of the member is completed.

In FIG. 6, the deposit application record details box 23g displays a deposit application for the above described rental deposit of 10,000 won in a state of the member's cash reserves of 0 won, and in FIG. 7, the deposit application record details box 23g indicates the completion of deposit and the amount of cash reserves in the cash reserves display box 23a changed to 10,000 won. In this case, the member may make a rent transaction contract by prepaying the rental deposit with the cash reserves of 10,000, for example, the member may make a contract of rent transaction described in the rental prepayment contract document shown in FIG. 5, in which a rental deposit of a product with a 10% of 1 lot, that is, 5,000 won ($5) is prepaid, two times.

After the rent transaction contract of the split product is confirmed as the above, the company server 10 displays a real-time exchange rate fluctuation value graph in the FX margin trading market on the member terminal 20 from a rental start time of the rent transaction contract while automatically displaying a stop position reaching guidance line 24a and a limit position reaching guidance line 24b in a rental start time period determined for the currently rent-traded split product on the exchange rate fluctuation value graph, and determines whether a split product which is rented by a rent transaction contract member reaches the stop position or the limit position according to the exchange rate fluctuation value (the fifth process).

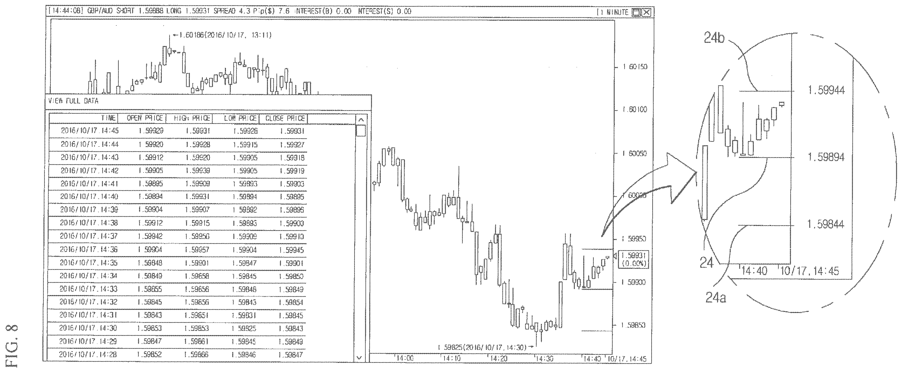

For reference, FIG. 8 is view of an embodiment illustrating a real-time exchange rate fluctuation value graph in an FX margin trading market which is displayed from a rental start time of a rent transaction contract for a split product generated from an FX margin trading product, which is a one-minute candlestick chart displaying AUD exchange rate fluctuation values of a currency pair (GPB/AUD) consisting of a base currency of GBP and a counter currency of AUD, the AUD exchange rate fluctuation values divided in segments of 10-minutes and represented with candlesticks at 1 minute intervals.

Another chart shown in FIG. 8 is a data table in which the exchange rate fluctuation values indicated in the one-minute candlestick chart, which are divided in segments of 10 minutes and represented with candlesticks at 1 minute intervals, are distinguished into an open price, a high price, a low price, and a close price at a time interval of one minute.

For example, in FIG. 8, when a member makes a rent transaction contract for a long position split product in a time period of October 17, 2017, 14: 40, a rental start time of the rent transaction is 14: 40 and a rental end time is 14:49, and when 14: 50 is reached, a new rent transaction which is generated by being distinguished and split based on the rental volume for each time period of 10 minutes is initiated.

The embodiment shown in FIG. 8 displays an open price of the exchange rate fluctuation value at the rental start time of 14: 40 of the rent transaction, that is 1.59894, as a reference line 24, and displays the stop position reaching guidance line 24a at a position of 1.59844 to indicate disqualification from a loss by difference of price with an exchange rate fluctuation value decrease of 50 (↓50) after the rental start time, that is, with the exchange rate fluctuation value reaching 1.59844, and displays the limit position reaching guidance line 24b at a position of 1.59944 to indicate profit taking with an exchange rate fluctuation value increase of 50 (↑50), that is, with the exchange rate fluctuation value reaching 1.59944 .

As described above, in a state that the stop position reaching guidance line 24a and the limit position reaching guidance line 24b in the rental start time period determined for the currently rent traded split product are automatically displayed on the exchange rate fluctuation value graph displayed on the member terminal 20, when the exchange rate fluctuation value of the currently rent traded split product is determined to reach the stop position in the corresponding rental start time period, the company server 10 notifies the member of disqualification from a loss by difference of price by turning on or flickering the stop position reaching guidance line 24a, and when the exchange rate fluctuation value of the currently rent traded split product is determined to reach the limit position in the corresponding rental start time period, the company server 10 notifies the member of profit taking by turning on or flickering the limit position reaching guidance line 24b (the sixth process).

As such, by turning on or flickering the stop position reaching guidance line 24a and the limit position reaching guidance line 24b, the member is able to conveniently and rapidly identify whether the rent transaction has disqualification from a loss by difference of price or profit taking.

When a member selects a product having a rental volume of 10% of one lot described in the rental prepayment contract document shown in FIG. 5, and makes a contract of rent transaction thereof, the company server 10 determines disqualification from a loss by difference of price in response to an exchange rate fluctuation value decrease of 50 (↓50) after the rental start time with reference to the open price of the exchange rate fluctuation value 1.59894 at the rental start time of 14:40, that is, upon the exchange rate fluctuation value reaching 1.59844, and turns on or flickers the stop position reaching guidance line 24a to notify the member of disqualification from a loss by difference of price.

On the contrary, the company server 10 determines profit taking in response to an exchange rate fluctuation value increase of 50 (t50) after the rental start time with reference to the open price of the exchange rate fluctuation value 1.59894 at the rental start time of 14:40, that is, upon the exchange rate fluctuation value reaching 1.59944, and turns on or flickers the limit position reaching guidance line 24b to notify the member of profit taking.

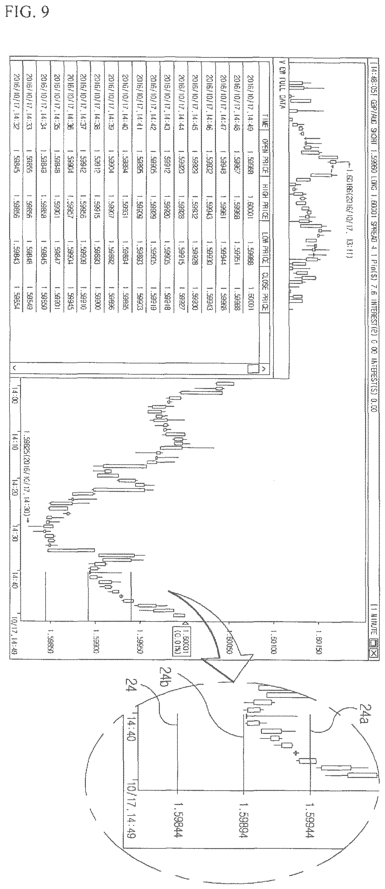

Referring to FIG. 9, it can be seen that the exchange rate fluctuation value of the currently rent traded long position split product shown in FIG. 8 has reached the limit position, for example, the limit position reaching guidance line 24b in the rental start time period.

Referring to the one-minute candlestick chart and the data table shown in FIG. 9, the exchange rate fluctuation value of the long position split product, for which the member has made a contract of rent transaction in a time period of October 17, 2017, 14:40, has an exchange rate fluctuation value increase of 50 (↑50) at October 17, 2017, 14:47 from the open price at a time of 14:40 '1.59894' indicated as the reference line 24, thus reach a low price of 1.59944.

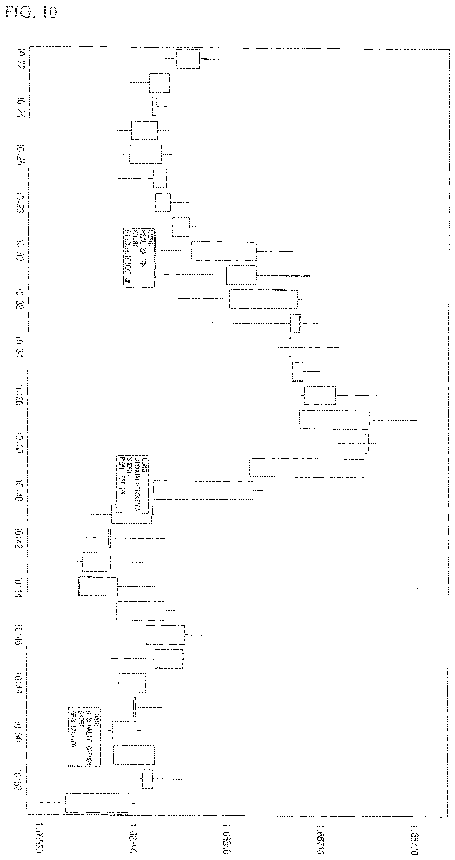

Alternatively, in the sixth process, a result of determining disqualification from a loss by difference of price or profit taking after a rent transaction of a split product generated from an FX margin trading product according to the present invention may be displayed on the exchange rate fluctuation value graph. For example, in FIG. 10, the company server 10 displays results of determining disqualification from a loss by difference of price or profit taking after a rent transaction of a short position split product or a long position split product on straight lines indicating points of rental start times in the exchange rate fluctuation value graph (for example, 10:30, 10:40 and 10:50), but the position displaying the result is not limited as long as it identifies the rental start time period.

Referring to FIG. 10, since the member terminal 20 displays a result of determining disqualification from a loss by difference of price or profit taking of the split product on the exchange rate fluctuation value graph to inform the member of the result when the rent transaction contract of the split product is terminated within the rental start time period, the member is able to conveniently and rapidly check a trend of disqualification from a loss by difference of price and profit taking of the rent transaction and thus may apply for a rent transaction contract in a direction beneficial in profit taking.

Meanwhile, in the sixth process, when the rent transaction contract of the split product currently being rent traded is not terminated in the corresponding rental start time period, the company server 10 is configured to indefinitely extend a contractual term of the rent transaction contract until the exchange rate fluctuation value of the split product which is not terminated with the rent transaction contract reaches the stop position or the limit position of the split product, to restrict the number of rent transaction contracts by a total number of transactions having a contractual term extended, that is, a total number of split products having a contractual term extended, and to terminate the rent transaction contract immediately after an exchange rate fluctuation value of the split product not terminated with the rent transaction contract reaches the stop position or the limit position of the split product during a period of the extension.

For example, in the embodiment shown in FIGS. 8 and 9, when a long position split product, for which a contract of a rent transaction is made by a member in a time period of October 17, 2017, 14:40, starting from an open price (1.59894, indicated as the reference line 24) of an exchange rate fluctuation value at 14:40, does not have an exchange rate fluctuation value increase of 50 (↑50), that is, the exchange rate fluctuation value thereof does not reach 1.59944 in the time period of October 17, 2017, 14:40, the company server 10 determines that the rent transaction contract of the long position split product in the time period of October 17, 2017, 14:40 has not been terminated, and extends a contractual term of the rent transaction to a time period of October 17, 2017, 14:50, next rent transaction time, and makes rent transaction contracts remaining after subtracting a number of rent transactions corresponding to the number of rent transaction contracts having a contractual term extended, among from all rent transaction contracts executable in the time period of October 17, 2017, 14:50.

When the rent transaction contract having a contractual term extended to the time period of October 17, 2017, 14:50 is not terminated even in the time period of October 17, 2017, 14:50, the contractual term of the rent transaction is extended again, and the rent transaction contract is terminated immediately after the exchange rate fluctuation value reaches the stop position or the limit position during a period of the extension.

As described above, the present invention indefinitely extends a contractual term of the rent transaction of the split product until the rent transaction of the currently rent traded split product is terminated, and restricts the number of rent transaction contracts by a total number of transactions having a contractual term extended, so that a split product generated from an FX margin trading product held by the company server 10 for providing an FX margin trading rent transaction service is prevented from being rent-traded illegally in dual or multi states in a state that the rent transaction contract is not terminated, and the reliability of the rent transaction service is improved.

When it is determined that a split product rented by a rent transaction contract member reaches the stop position or the limit position as described above, the company server 10 determines disqualification from a loss by difference of price or profit taking, and terminates the rent transaction contract of the member and notifies the member terminal of the result of determination, and in the case of disqualification from a loss by difference of price, the company server 10 settles the rental deposit as loss from difference of price, and in the case of profit taking, settles a sum of the rental deposit and an agreed profit distribution as profit margin (the seventh process).

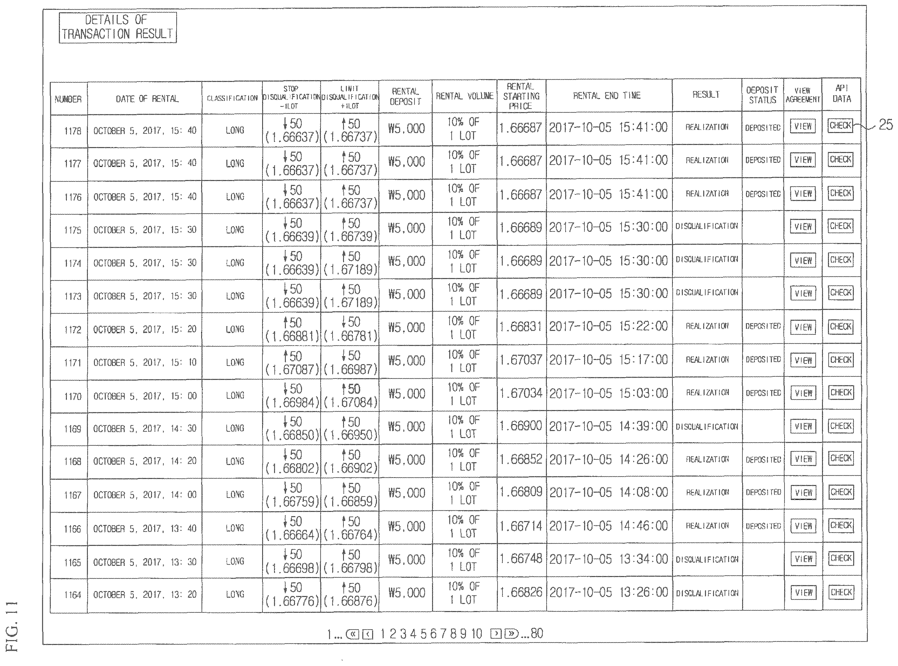

For reference, FIG. 11 is a view of an embodiment illustrating a screen in which the company server 10 determines disqualification from a loss by difference of price or profit taking as a result of rent transaction of a split product generated from an FX margin trading product according to the present invention, terminates a rent transaction contract of a member, and notifies the member terminal 20 of the termination.

In FIG. 11, for each of the rent transaction contracts of members, for example, each of the long position split products and each of the short position split products, a result of contract termination obtained at a rental end time is displayed as profit taking or disqualification from a loss by difference of price, and in the case of profit taking, payment of profit margin is indicated as deposited.

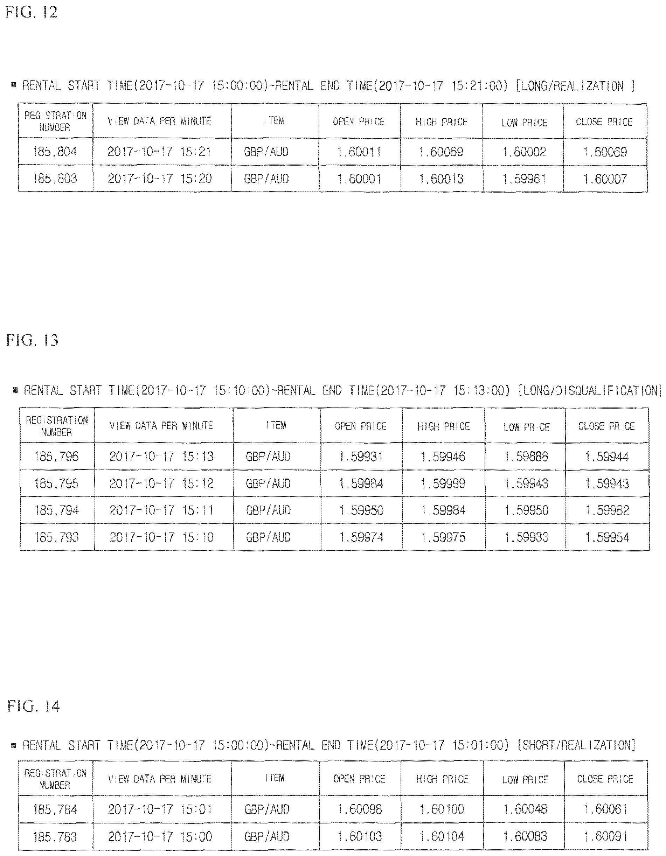

When a check button 25 of API data item shown in FIG. 11 is selected, data table screens in which disqualification from a loss by difference of price or profit taking is determined as a result of rent transaction of a split product generated from an FX margin trading product according to the present invention are displayed as in FIGS. 12 to 15.

FIG. 12 is a data table screen in which profit taking is determined as a long position split product, for which a member has made a contract for a rent transaction in a time period of October 17, 2017, 15: 20, reaches a limit position corresponding to an exchange rate fluctuation value increase of 50(↑50), in which with respect to a currency pair (GBP/AUD), an AUD exchange rate fluctuation value at October 17, 2017, 15: 20 starts increasing from an open price at a rental start time (1.60001) to reach a limit position corresponding to an exchange rate fluctuation value increase of 50 (T50) at October 17, 2017, 15: 21, reaching 1.60051, which is an exchange rate fluctuation value increased by 50 relative to the open price of 1.60001, and then further increases up to 1.60069, so that profit taking is determined.

FIG. 13 is a data table screen in which disqualification from a loss by difference of price is determined as a long position split product, for which a member has made a contract for a rent transaction in a time period of October 17, 2017, 15: 10, reaches a stop position corresponding to an exchange rate fluctuation value decrease of 50(↓50), in which with respect to a currency pair (GBP/AUD), an AUD exchange rate fluctuation value at October 17, 2017, 15: 10 starts decreasing from an open price at a rental start time (1.59974) to reach a stop position corresponding to an exchange rate fluctuation decrease of 50 (↓50) at October 17, 2017, 15: 13, reaching 1.59924, which is an exchange rate fluctuation value decreased by 50 relative to the open price of 1.59974, and then further decreases up to 1.59888, so that disqualification from a loss by difference of price is determined.

FIG. 14 is a data table screen in which profit taking is determined as a short position split product, for which a member has made a contract for a rent transaction in a time period of October 17, 2017, 15: 00, reaches a limit position corresponding to an exchange rate fluctuation value decrease of 50(150), in which with respect to a currency pair (GBP/AUD), an AUD exchange rate fluctuation value at October 17, 2017, 15: 00 starts decreasing from an open price at a rental start time (1.60103) to reach a limit position corresponding to an exchange rate fluctuation decrease of 50 (↓50) at October 17, 2017, 15: 01, reaching 1.60053, which is an exchange rate fluctuation value decreased by 50 relative to the open price of 1.60103, and then further decreases up to 1.60048, so that profit taking is determined.

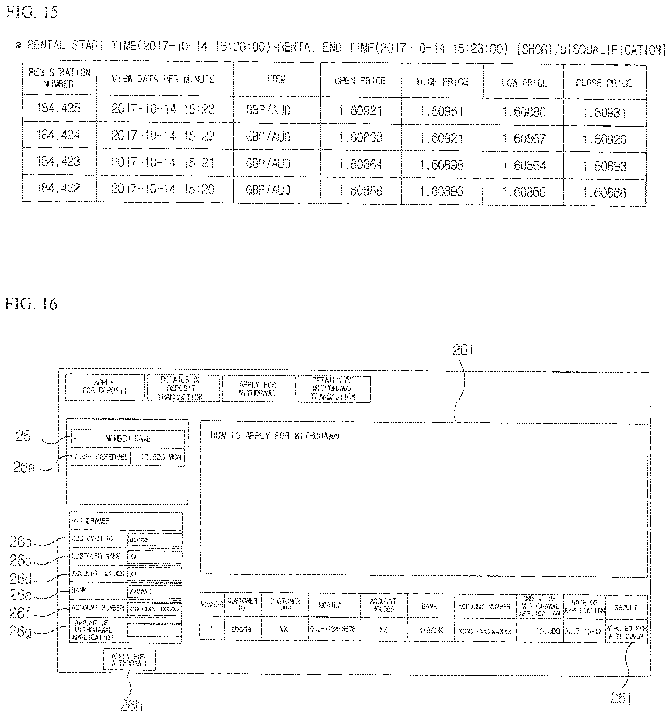

FIG. 15 is a data table screen in which disqualification from a loss by difference of price is determined as a short position split product, for which a member has made a contract for a rent transaction in a time period of October 17, 2017, 15: 20, reaches a stop position corresponding to an exchange rate fluctuation value increase of 50(↑50), in which with respect to a currency pair (GBP/AUD), an AUD exchange rate fluctuation value at October 17, 2017, 15: 20 starts increasing from an open price at a rental start time (1.60888) to reach a stop position corresponding to an exchange rate fluctuation increase of 50 (↑50) at October 17, 2017, 15: 23, reaching 1.60938, which is an exchange rate fluctuation value increased by 50 relative to the open price of 1.60888, and then further increases up to 1.60951, so that disqualification from a loss by difference of price is determined.

As a result from the determination of disqualification from a loss by difference of price or profit taking, when a disqualification from a loss by difference of price is determined, the company server 10 settles the rental deposit as a loss from difference of price, and cumulatively stores the rental deposit as a preliminary customer margin to be additionally deposited upon notification of a margin call for an FX margin trading product being held and currently not being closed out.

For example, as shown in FIG. 3, when a rent transaction (a rental volume of 1 lot) of a long position split product having an exchange rate fluctuation value increase of 50 (↑50) and a rental deposit of 50,000 won ($50) for rent transaction is determined to be disqualification from a loss by difference of price, the company server 10 settles the rental deposit of 50,000 won ($50) as loss from difference of price so as to be cumulatively stored as a preliminary customer margin.

For example, as shown in FIG. 3, when a rent transaction (a rental volume of 2 lots) of a long position split product having an exchange rate fluctuation value increase of 50 (↑50) and a rental deposit of 100,000 won ($100) for rent transaction is determined to be disqualification from a loss by difference of price, the company server 10 settles the rental deposit of 100,000 won ($100) as loss from difference of price so as to be cumulatively stored as a preliminary customer margin.

For example, as shown in FIG. 3, when a rent transaction (a rental volume of 10% of 1 lot) of a long position split product having an exchange rate fluctuation value increase of 50 (↑50) and a rental deposit of 5,000 won ($5) for rent transaction (hereinafter, referred to as a first rent transaction with a rental volume of 10% of 1 lot) is determined to be disqualification from a loss by difference of price, the company server 10 settles the rental deposit of 5,000 won ($5) as loss from difference of price so as to be cumulatively stored as a preliminary customer margin.

For example, as shown in FIG. 3, when a rent transaction (a rental volume of 10% of 1 lot) of a long position split product having an exchange rate fluctuation value increase of 500 (↑500) and a rental deposit of 5,000 won ($5) for rent transaction (hereinafter, referred to as a second rent transaction with a rental volume of 10% of 1 lot) is determined to be disqualification from a loss by difference of price, the company server 10 settles the rental deposit of 5,000 won ($5) as loss from difference of price so as to be cumulatively stored as a preliminary customer margin.

On the contrary, as a result of the determination of disqualification from a loss by difference of price or profit taking, when profit taking is determined, the company server 10 settles a sum of the rental deposit and an agreed profit distribution as profit margin, and pays the member for the profit margin.

For example, when the first rent transaction with a rental volume of 10% of 1 lot is determined to be profit taking, the company server 10 settles a sum of the rental deposit of 5,000 won ($5) and an agreed profit distribution of 4,300 won ($4.3) specified in the rental prepayment contract document shown in FIG. 5 as profit margin of 9,300 won ($9.3), and pays the member for the profit margin.

For example, when the second rent transaction with a rental volume of 10% of 1 lot and an exchange rate fluctuation value increase of 500 (↑500) has an agreed profit distribution of 43,000 won ($43) which is ten times greater than that of the first rent transaction with a rental volume of 10% of 1 lot, and the second rent transaction is determined to be profit taking, the company server 10 settles a sum of the rental deposit of 5,000 won ($5) and the agreed profit distribution of 43,000 won ($43) as profit margin of 48,000 won ($48), and pays the member for the profit margin.

In this case, the company server 10 may pay the profit distribution lowered at an agreed rate (for example, equal or less than 30% of the profit distribution) such that a sum of the profit margins accruing at a time of a rent transaction of a member is less than the cumulated preliminary customer margin, thereby preventing default on paying the profit margin in rent transactions of a member.

For example, in order to prevent default on paying profit margins in rent transactions of the member, when the second rent transaction with a rental volume of 10% of 1 lot is determined to be profit taking, the company server 10 does not pay the whole profit distribution of 43,000 won ($43) but pays a distribution lowered at a previously agreed rate, for example, pays an amount of 30,100 won ($30.1) lowered to be equal or less than 30% of the whole distribution.

For reference, FIG. 16 is a view of an embodiment illustrating a withdrawal application screen in which a member's request for profit margin payment is confirmed according to selection of a withdrawal application button (not marked) in FIG. 6 or 7 and is displayed on the member terminal 20, which is an example of a withdrawal application screen related to paying a profit margin that is a sum of a rental deposit and an agreed profit distribution according to the present invention.

FIG. 16 includes a member name display box 26, a cash reserves display box 26a, a customer ID display box 26b of a withdrawee, a customer name display box 26c, an account holder display box 26d, a bank display box 26e, an account number display box 26f, a withdrawal application amount input box 26g, a withdrawal application button 26h, a withdrawal application method and description box 26i, and a withdrawal application details display box 26j including a customer ID, a customer name, a mobile phone number, an account holder, a bank, an account number, an amount of withdrawal application, a date of withdrawal application, and a result.

When a withdrawal transaction detail button (not marked) is selected, contents displayed in the withdrawal application details display box 26j are organized by dates of withdrawal applications whenever a withdrawal application is made by a member and are displayed in the member terminal 20 as withdrawal transaction details.

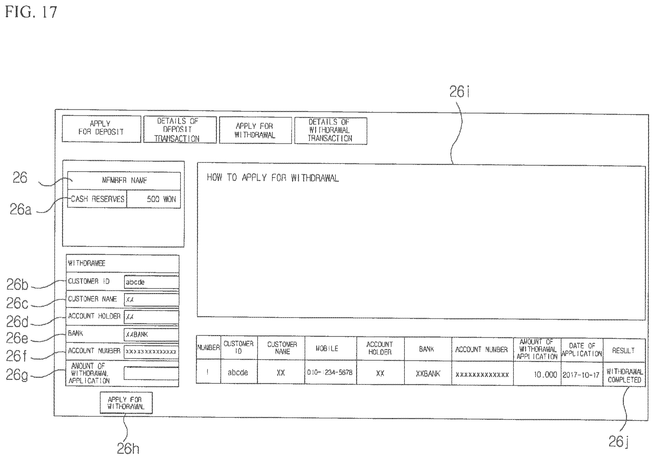

FIG. 16 illustrates a screen in which the member terminal 20 confirms that the amount of withdrawal application corresponding to a profit margin, which is a sum of the rental deposit and the agreed profit distribution, or corresponding to a portion of the profit margin has been entered in the withdrawal application amount input box 26g, and as the withdrawal application button 26h is selected, requests a withdrawal application of the member. FIG. 17 illustrates a screen in which when the company server 10 has completed settling payment for the amount of withdrawal application from the company account to the member account through a bank account transfer, and the member terminal 20 is notified that the withdrawal application of the member is completed.

In FIG. 16, the withdrawal application record details box 26j displays a withdrawal application of 10,000 won in a state of the member's cash reserves of 10,500 won, and in FIG. 17, the withdrawal application details display box 26j displays the completion of withdrawal and the amount of cash reserves changed to 500 won is shown in the cash reserves display box 26a.

When the member uses the FX margin trading rent transaction service, in which a split product generated from an FX margin trading product held by the company server 10 is rented, according to the present invention as described above, the small amount of rental deposit is settled as loss from difference of price in the case of disqualification from a loss by difference of price for the rented split product, and a sum of the rental deposit and the profit distribution agreed for the rented FX margin trading product is given as profit margin in the case of profit taking, so that an FX margin trading habit of limiting loss from difference of price to the small amount of rental deposit to minimize the loss from difference of price while maximizing the profit margin is acquired, and the profit margin is realized as an actual investment return so that a rent transaction contract is made again.

The above-described FX margin trading rent transaction method according to the present invention is not limited to the above-described embodiments, and those skilled in the art will appreciate that various modifications and changes may be made without departing from the scope and sprit of the present invention.

## Claims

1. A foreign exchange (FX) margin trading rent transaction method comprising:
a first process in which a company server operated by an FX margin trading rent transaction service providing company holds at least one FX margin trading product through a transaction contract of paying a customer margin for a transaction and a spread cost in a capacity as an investor in an FX margin trading market;
a second process in which the company server generates at least one split product by distinguishing and splitting the at least one FX margin trading product based on a rental volume for each rental start time period in which a rental start time and a rental end time are determined and setting a stop position indicating disqualification from a loss by difference of price and a limit position indicating profit taking, and sets a rental deposit for each of the at least one split product;
a third process in which when a member terminal used by a member requesting an FX margin trading rent transaction service accesses and logs in the company server, the company server displays a rental start time, a stop position, a limit position, a rental deposit, and a rent transaction contract application button that are distinguished for each of the at least one split product on the member terminal;
a fourth process in which when the member terminal of the split product prepays a rental deposit of the split product after the rent transaction contract application button displayed on the member terminal is pressed, the company server confirms a rent transaction contract of the split product, the rental deposit of which is prepaid, and provides a guidance of a rent transaction status for each split product to the member terminal such that the members check a rent transaction trend and apply for a rent transaction contract;
a fifth process in which after the rent transaction contract of the split product is confirmed, the company server displays a real-time exchange rate fluctuation value graph in the FX margin trading market on the member terminal from a rental start time of the rent transaction contract while automatically displaying on the exchange rate fluctuation value graph a stop position reaching guidance line and a limit position reaching guidance line in the rental start time period determined for the split product which is currently being rent traded, and determines whether a split product rented by a rent transaction contract member reaches the stop position or the limit position according to the exchange rate fluctuation value;
a sixth process in which the company server notifies the member of disqualification from a loss by difference of price by turning on or flickering the stop position reaching guidance line when the exchange rate fluctuation value of the split product currently being rent traded is identified to reach the stop position in the rental start time period, and notifies the member of profit taking by turning on or flickering the limit position reaching guidance line when the exchange rate fluctuation value of the split product currently being rent traded is identified to reach the limit position in the rental start time period; and
a seventh process in which the company server determines, upon identifying that the split product rented by the rent transaction contract member has reached the stop position or the limit position, disqualification from a loss by difference of price or profit taking, and terminates the rent transaction contract of the member and notifies the member terminal of the termination, wherein in the case of disqualification from a loss by difference of price, the rental deposit is settled as loss from difference of price and in the case of profit taking, a sum of the rental deposit and an agreed profit distribution is settled as profit margin.

2. The foreign exchange (FX) margin trading rent transaction method of claim 1, wherein in the second process, the company server generates at least one long position split product from the FX margin trading product currently held by the company server.

3. The foreign exchange (FX) margin trading rent transaction method of claim 1, wherein in the second process, the company server generates at least one shot position split product from the FX margin trading product currently held by the company server.

4. The foreign exchange (FX) margin trading rent transaction method of claim 1, wherein in the second process, the company server generates at least one long position split product and at least one short position split product from the FX margin trading product currently held by the company server.

5. The foreign exchange (FX) margin trading rent transaction method of claim 1, wherein in the fourth process, the company server provides the guidance of the rent transaction status for each of split products by using one or at least two of a method of displaying a variation in the number of remaining rent transaction contracts by changing a color of the rent transaction contract application button displayed on the member terminal, a method of displaying a signal lamp indicating a variation in the number of remaining rent transaction contracts on the member terminal, and a method of displaying a numeral corresponding to the number of remaining rent transaction contracts on the member terminal.

6. The foreign exchange (FX) margin trading rent transaction method of claim 1, wherein in the fourth process, the company server confirms rent transaction contracts for the respective split products, prints out each of the rent transaction contracts, and issues and automatically stores a rental prepayment contract document that specifies a rental start time, a stop position, a limit position, a rental deposit which is offset-settled as loss from difference of price in the case of disqualification from a loss by difference of price, a profit distribution which is paid together with a rental deposit in the case of profit taking, and a member identification (ID) for each of the rent transaction contract members.

7. The foreign exchange (FX) margin trading rent transaction method of claim 1, wherein in the sixth process, when the rent transaction contract of the split product is terminated in the corresponding rental start time period, the member terminal displays a result of determining disqualification from a loss by difference of price or profit taking of the split product on the exchange rate fluctuation value graph to notify the member of the result.

8. The foreign exchange (FX) margin trading rent transaction method of claim 1, wherein in the sixth process, when the rent transaction contract of the split product is not terminated in the corresponding rental start time period, the company server indefinitely extends a contractual term of the rent transaction contract until the exchange rate fluctuation value of the split product, which is not terminated with the rent transaction contract, reaches the stop position or the limit position of the split product, restricts the number of rent transaction contracts by a total number of transactions having a contractual term extended, that is, a total number of split products having a contractual term extended, and terminates the rent transaction contract immediately after the exchange rate fluctuation value of the split product, which is not terminated with the rent transaction contract, reaches the stop position or the limit position of the split product during a period of the extension.

9. The foreign exchange (FX) margin trading rent transaction method of claim 1, wherein in the seventh process, in the case of disqualification from a loss by difference of price, the company server does settles the rental deposit as loss from difference of price, and cumulatively stores the rental deposit as a preliminary customer margin to be additionally deposited upon notification of a margin call for an FX margin trading product being held and currently not closed out by the company server.

10. The foreign exchange (FX) margin trading rent transaction method of claim 1, wherein in the seventh process, in the case of disqualification from a loss by difference of price, the company server settles the rental deposit as loss from difference of price, but cumulatively stores the rental deposit as a preliminary customer margin to be additionally deposited upon notification of a margin call for an FX margin trading product being held and currently not closed out, and pays the profit distribution lowered at an agreed rate such that a sum of the profit margins accruing at a time of a rent transaction of a member is less than the cumulated preliminary customer margin, thereby preventing default on paying the profit margin.
